# EUROPEAN PATENT SPECIFICATION

(11) **EP 1 589 808 B1**
(45) Date of publication and mention of the grant of the patent: **17.10.2007**
(21) Application number: 03786436.0
(22) Date of filing: 24.12.2003
(51) Int. Cl.: A01K 1/00, A01K 1/10

(54) **STABLE DESIGN AND STALL FOR USE THEREIN**
STALLANORDNUNG UND DARIN VERWENDETE TIERBOX
STRUCTURE D'ÉTABLE ET STALLE FAISANT PARTIE DE CELLE-CI

(30) Priority: 24.12.2002 NL 1022268
(43) Date of publication of application: 02.11.2005
(73) Proprietor: Van Dijk, Gerrit, 8278 AE Kamperveen (NL)
(72) Inventor: VAN DIJK, Gerrit, NL-8278 AE Kamperveen (NL); VAN DIJK-VAN DER SCHEER, Truus, Frederike, NL-8278 AE Kamperveen (NL)
(74) Representative: Bartelds, Erik
(86) International application number: PCT/NL2003/000942
(87) International publication number: WO 2004/068938

(56) References cited:
- DE-A- 1 607 067
- DE-A- 3 107 462
- FR-A- 1 530 107
- US-A- 3 693 592

## Description

The invention relates to a stable design, comprising a number of mutually adjacent stalls, each bounded by a number of walls and each having a front wall adjoining a passageway, the front wall of at least some of the stalls having a part which is set back from the passageway, at least one opening being formed in the set-back part of the wall. Such a stable design is known from DE-A-31 07 462, in particular for accommodating horses and similar animals.

In the design of such a stable different considerations have to be taken in account. Architectural considerations include the structural aspects of the stable design and on efficient use of the available space, while operational aspects also play a role, like the risk of infection pressure, the presence of objects in the stall, the prevention - as much as possible - of food envy and stall vices, the possibility of dietary management, the need of the stabled animals for socializing and the possibility of mucking-out the stall mechanically.

In conventional stable design the stalls are substantially rectangular, and their front walls adjoining the passageway form a continuous wall, in which there is generally formed at the position of each stall in any case one opening through which horses can place their head. A food trough is present in each stall, and usually also a rack. Feed pellets, oats and/or other feed supplied in a bag which can be eaten by the horses is poured into this feed trough. Roughage can be placed in the rack. This roughage can optionally also just be placed on the ground in the stall.

Although the conventional stable design has the particular advantage of being structurally relatively simple, it also has a number of drawbacks.

In respect of infection pressure, it is thus the case that horses are animals which in nature take up their food from the ground. In the meadow horses have places where they defecate and where they do not eat the grass. They naturally do not therefore eat in the vicinity of their dung, which forms a source of eggs for all manner of parasites. As stated, when stabled a horse receives its feed in the stall. Since there is almost always spillage during eating and, after the feed trough is empty, the remnants among the litter on the ground are sought out and eaten, there is a danger of infections because the horse dung is after all lying in the stall. When the roughage is thrown onto the ground, it is sometimes pawed through the stall or trampled or used as lying-down area. There are also horses which defecate in the feed trough or stand in the feed trough when they become agitated, thereby increasing the risk of infection or reinfection.

The spreading of spilt feed through the stall also makes it impossible to keep accurate track of precisely how much each horse has eaten, the so-called dietary control.

Standing in the feed trough as mentioned above also involves the risk of injuries to the horse. It is generally so that all objects in a stall are potential hazards for a horse. This is all the more so because horses often become bored in the stall. In order to dispel the boredom they have a tendency, among others, to bite on everything in the stall, for instance the feed trough. Boredom also results in other undesirable behaviour, such as pacing back and forth, weaving and wind-sucking. These activities, which adversely affect the general condition of the horse, are designated collectively as stall vices.

Another drawback of the conventional stable design is that horses are herd animals and therefore like to have contact with other horses or people, referred to as socializing. To this end horses, when they are stabled, often place their head through the opening in the wall of the stall into the passageway. This entails the passageway having to be relatively wide to allow safe passage along the stalls, i.e. without the possibility of being bitten. This latter is particularly the case when other horses have to be guided through the passageway.

Moreover, the social behaviour of the animals leads to them regularly looking into each others stalls - though grill bars which are usually arranged in the sidewalls between adjacent stalls. However, when horses watch each other eat this may lead to food envy, which reveals itself in kicking, biting and further unrest. A lot of food is then spilt.

Finally, conventional stable designs have the drawback that the walls, in particular the front wall adjoining the passageway, are frequently not strong and rigid enough to hang for instance a stall door therein. Strengthening is in this case necessary, for instance in the form of a profile wholly enclosing the door, but this results in the presence of an inconvenient box girder at the bottom of the door opening.

The above-identified prior art document DE-A-31 07 462 discloses a horse stable in which the stalls each have a heptagonal floor plan. Each stall includes has a front wall facing a passageway, which front wall has a central part and two set back parts on both sides of the central part. Each stall further has a rear wall including two set back parts that come together in a central post. A door opening is formed in one of the set back parts of the front wall. There are no other openings in the front wall, which consists of a solid lower half and an upper grating. Inside each stall there is a rack for hay and a through for oats; there are no other provisions for feeding the horses. The heptagonal floor plan is selected so that a stall with sufficient room for a horse is provided, while the side walls are kept so short as to prevent a horse from lying down next to one of these walls, which would entail a risk of the horse getting stuck.

Another stable design having non-rectangular stalls is disclosed in US-A-3 693 592. This prior art document shows a stable having octagonal stalls, which also include wall parts. However, this document does not disclose any openings in the wall facing the passageway, except for door openings which appear to be for human use. The openings for horses are arranged in the wall facing outside, and then in the straight part of the wall, rather than the set-back part. Sliding doors or "dutch type" doors are arranged in these openings. There is no mention of any opening in the set-back parts of the walls, nor of any provision for feeding horses from outside the stalls.

The invention therefore has for its object to improve a stable design of the above described type such that the above stated drawbacks no longer occur. This is achieved according to the invention in that the opening is a feeding opening through which a horse stabled in the stall can place its head into the passageway, said feeding opening being formed at a small height above the ground, in particular less than one metre from the ground, such that when the horse places its head through the feeding opening it can reach the ground with its mouth.

In this manner it is possible to provide the feed outside the stall in the space bounded by the set-back part of the wall and the extension of the wall. The stall can thus remain free of objects such as food troughs, racks and the like, while there is moreover a much smaller risk of feed finding its way onto the ground in the stall, which could result in infections. Moreover, in this way it is possible to monitor how much food each horse actually eats. Another advantage of the low opening is that the horses are thereby easier to stroke and will thus be tamed earlier.

A structurally simple embodiment of the stable design is obtained when the set-back part ends in a side wall of the stall.

A part of the front wall of the adjacent stall adjoining the set-back part is preferably also set back from the passageway, but has no opening. In this manner the space available for feed is further increased, while there is no danger of mutual contact between horses in adjoining stalls. In this way food envy is prevented.

The set-back part of the wall can run at an angle, which is structurally simple, or be curved, which can be aesthetically more attractive.

When an entrance opening closable by a door is formed in the front wall of the stall, the construction of the wall is preferably interrupted, at least on the underside of the entrance opening. This makes it easily possible to muck out the stalls mechanically.

Finally, the invention also relates to a stall for use in a stable design as described above.

The invention will now be elucidated on the basis of two embodiments, wherein reference is made to the annexed drawing, in which:
Fig. 1 shows a ground plan of a stable with a stable design according to a first embodiment of the invention,
Fig. 2 shows a front view of the front walls, adjoining the passageway, of a number of adjacent stalls of the stable design of fig. 1,

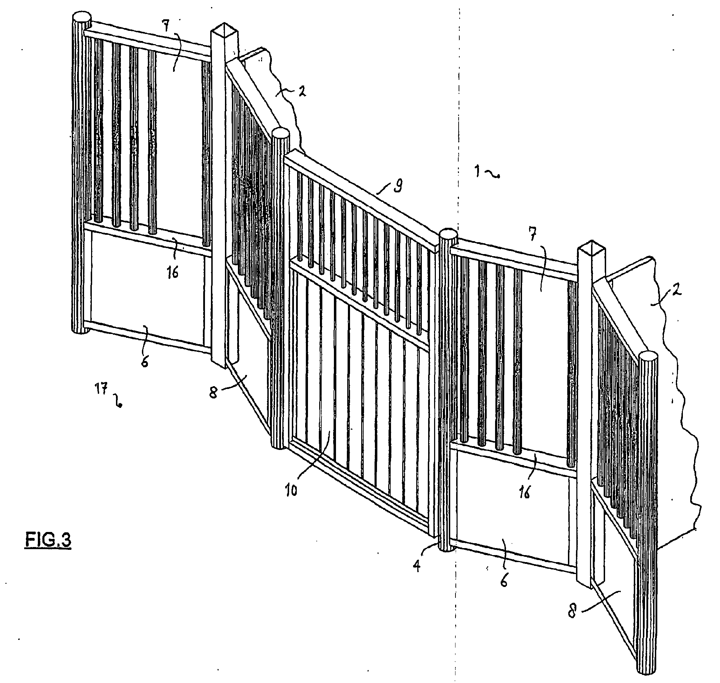

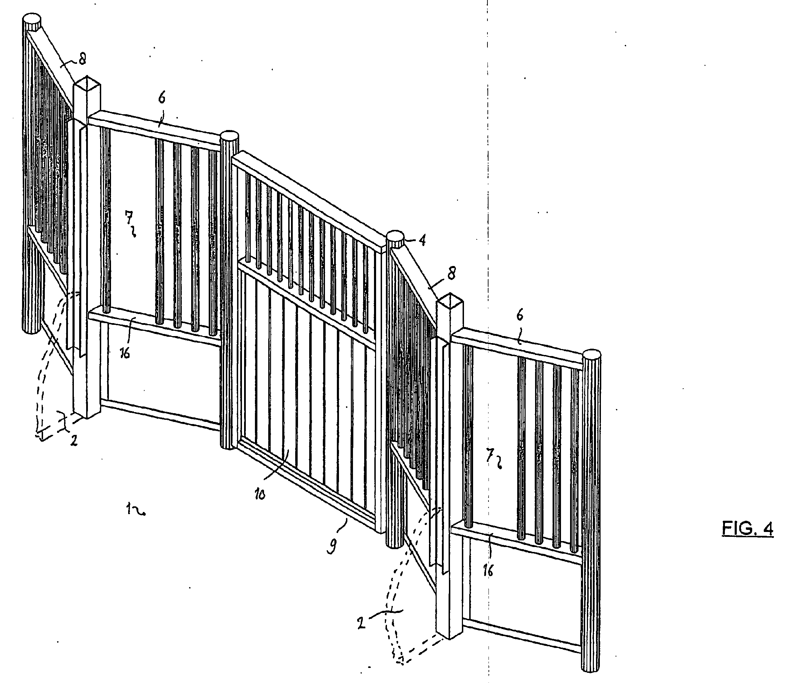

Fig. 3 and 4 are respectively a perspective front view and a perspective rear view of some of the walls of a number of stalls, wherein side walls between adjacent stalls are largely broken away, and
Fig. 5 shows a ground plan of an alternative stable design according to the invention.

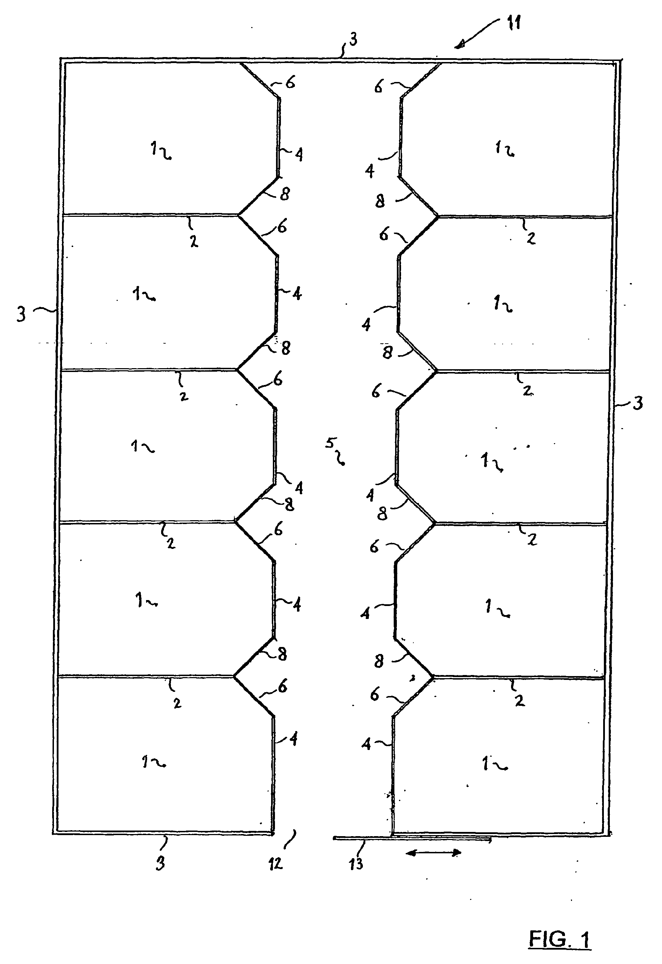

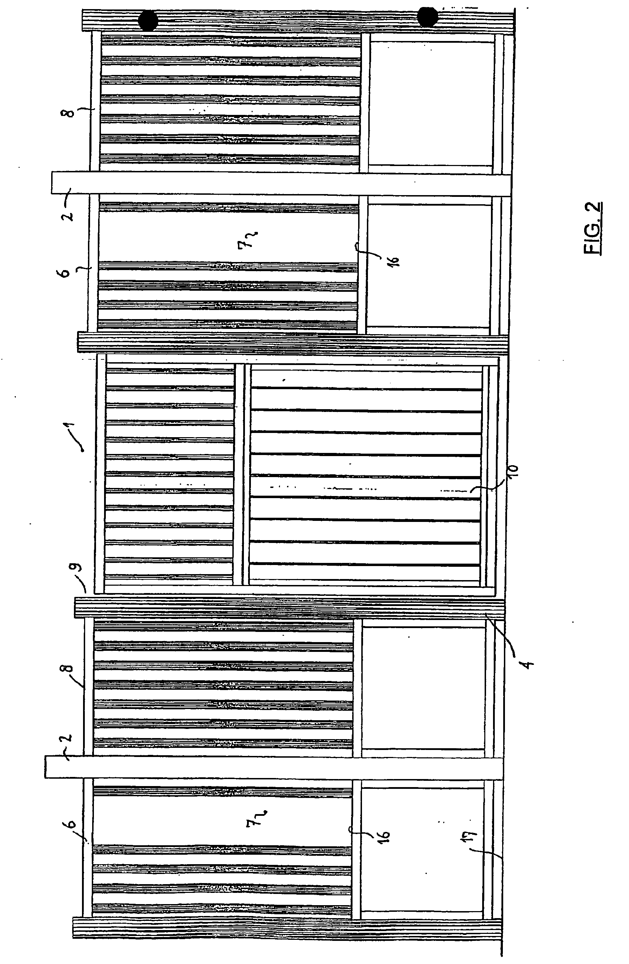

A stable 11 (fig. 1), in particular a horse stable, is bounded by a number of walls 3, in one of which is formed a door opening 12 for closing with a stable door 13. Formed in stable 11 are two rows of stalls 1 which are mutually separated by a passageway 5. Each stall 1, in which a horse can be stabled, is bounded on one side by one of the stable walls 3, and on two sides by side walls 2, which are shared with the neighbouring stalls 1. On the side directed toward passageway 5 each stall 1 is closed by a front wall 4 in which there is formed, among other things, an entrance opening 9 which is closed by a door 10. Side walls 2 and front walls 4 are each formed in conventional manner by a lower part 14 which is closed and grill bars 15 placed thereabove (fig. 2).

According to the present invention the front wall 4 of one or more of the stalls 1 is provided with a part 6 which, as seen from passageway 5, is set back. In the shown embodiment all front walls 4 also have such a set-back part 6. The set-back wall part 6 is here an end part of front wall 4, and thus connects to a side wall 2. Formed in this set-back wall part 6 is an opening 7 through which a horse stabled in stall 1 can place its head into the passageway 5. As a result of the placing of opening 7 in the set-back wall part 6, the head herein protrudes less far into passageway 5 than is the case in conventional stable designs. Passageway 5 can therefore be given a narrower form, and a larger part of the area available in stable 11 can therefore be used for the stalls 1.

In the shown embodiment the opening 7 extends relatively far downward so that the lower edge 16 thereof is situated at a small height above the ground 17. When the horse places its head through opening 7 it can thus reach the ground 17 with its mouth. Opening 7 hereby functions as feeding opening, and the feed can be given outside stall 1. The feed can herein be placed in the space bounded by the set-back wall part 6 and the extension of front wall 4, so that it does not really lie in passageway 5 and cannot therefore be trampled by passing horses.

In the shown embodiment, that part 8 of the front wall 4 of each subsequent stall 1 adjacent to the set-back wall part 6 of a preceding stall 1 is likewise also set back. The space available for placing feed is hereby increased considerably. No opening is however formed in this second set-back wall part 6, so that a horse stabled in said stall cannot reach the feed at that position. Conflicts between horses in adjoining stalls regarding feed, known as food envy, are thus prevented. As a result of the chosen embodiment of front wall 4 a horse which is eating is not even visible, or hardly so, to a horse in an adjoining stall 1, whereby a significant source of food envy is removed.

Owing to the presence of the set-back wall parts 6, 8, front wall 4 acquires as it were a slight "wave" shape, whereby it is stronger and more rigid than a conventional, flat front wall. Front wall 4 according to the invention is thereby also suitable for instance for supporting a loft or roof construction of stable 11. Separate pillars are therefore no longer necessary for this purpose, which also enhances the use of space in stable 11 and provides a greater freedom of design.

In addition, the increased strength and rigidity of front wall 4 can advantageously be used for cantilevered suspension of door 10 in entrance opening 9. Owing to the great rigidity of front wall 4 a box girder does not therefore have to be used on the underside of door 10 at the position of entrance opening 9, whereby stall 1 can be mucked out mechanically in simple manner.

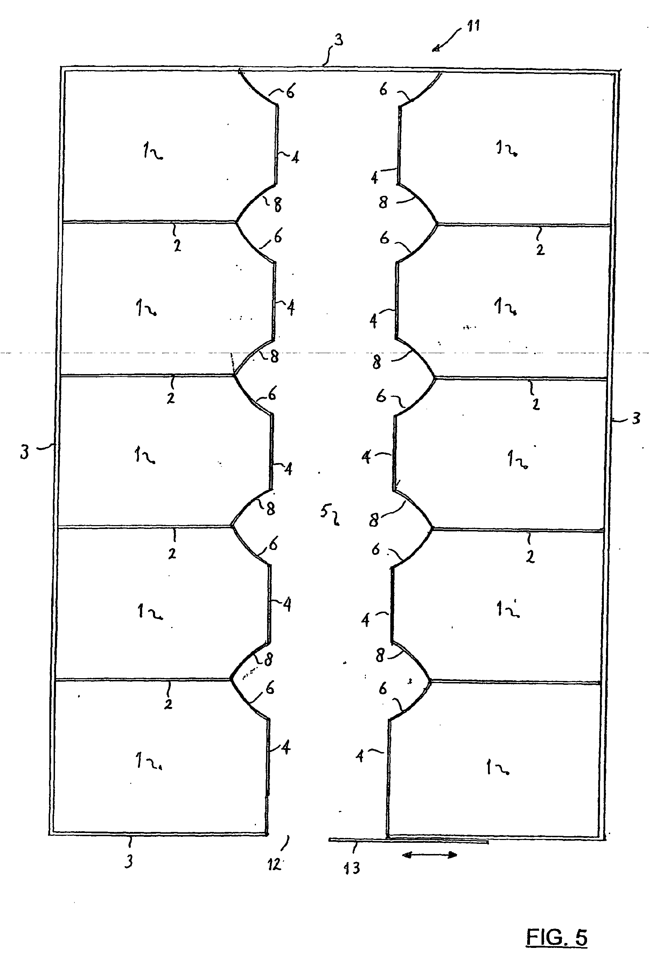

Because substantially flat parts are applied, the shown embodiment of the stable design is relatively simple and can be manufactured at low cost. A more decorative embodiment, with for instance curved set-back wall parts (fig. 5), can however also be envisaged. In that case the grill bars 15 on the upper part of front wall 4 could of course also take a curved form.

Although the invention is elucidated above on the basis of two exemplary embodiments, it is of course not limited thereto. The set-back wall parts could thus be embodied otherwise than now shown, for instance with a different contour or at another location in the front wall. The general embodiment and construction of the walls, in particular the front wall, can also be varied in many ways. It is also possible to envisage a different choice of the location and embodiment of the entrance opening and door. The scope of the invention is therefore defined solely by the following claims.

## Claims

1. Stable design, comprising a number of mutually adjacent stalls (1), each bounded by a number of walls and each having a front wall (4) adjoining a passageway (5), the front wall (4) of at least some of the stalls (1) having a part (6) which is set back from the passageway (5), at least one opening (7) being formed in the set-back part (6) of the wall (4), **characterized in that** the opening (7) is a feeding opening through which a horse stabled in the stall (1) can place its head into the passageway (5), said feeding opening (7) being formed at a small height above the ground, in particular less than one metre from the ground, such that when the horse places its head through the feeding opening (7) it can reach the ground (17) with its mouth.

2. Stable design as claimed in claim 1, **characterized in that** the set-back part (6) ends in a side wall (2) of the stall (1).

3. Stable design as claimed in claim 1 or 2, **characterized in that** a part (8) of the front wall (4) of the adjacent stall (1) adjoining the set-back part (6) is also set back from the passageway (5), but has no opening.

4. Stable design as claimed in any of the foregoing claims, **characterized in that** the or each set-back part (6, 8) runs at an angle.

5. stable design as claimed in any of the claims 1 to 3, **characterized in that** the or each set-back part (6, 8) is curved.

6. Stable design as claimed in any of the foregoing claims, **characterized in that** an entrance opening (9) closable by a door (10) is formed in the front wall (4) of the stall (1), the construction of the wall (4) being interrupted, at least on the underside of the entrance opening (9).

7. Stall (1) for use in a stable design as claimed in any of the foregoing claims, said stall (1) being bounded by a number of walls and having a front wall (4) adjoining a passageway (5), said front wall (4) having a part (6) which is set back from the passageway (5), at least one opening (7) being formed in the set-back part (6) of the wall (4), **characterized in that** the opening (7) is a feeding opening through which a horse stabled in the stall (1) can place its head into the passageway (5), said feeding opening (7) being formed at a small height above the ground, in particular less than one metre from the ground, such that when the horse places its head through the feeding opening (7) it can reach the ground (17) with its mouth.

## Patentansprüche

1. Stallanordnung, umfassend eine Anzahl von nebeneinander anliegenden Ställen (1), wobei jeder von einer Anzahl von Wänden eingegrenzt ist und jeder eine an einem Gang (5) angrenzende Stirnwand (4) aufweist, wobei die Stirnwand (4) von zumindest einigen Ställen (1) einen Teil (6) aufweist, der vom Gang (5) nach hinten versetzt ist, wobei zumindest eine Öffnung (7) in dem nach hinten versetzten Teil (6) der Wand (4) ausgestaltet ist, **dadurch gekennzeichnet, dass** die Öffnung (7) eine Öffnung zum Füttern ist, durch die ein im Stall (1) gehaltenes Pferd seinen Kopf in den Gang (5) strecken kann, wobei die Öffnung (7) zum Füttern in einer geringen Höhe über dem Boden ausgestaltet ist, im Wesentlichen weniger als ein Meter über dem Boden, so dass wenn das Pferd seinen Kopf durch die Öffnung (7) zum Füttern streckt, es den Boden (17) mit seinem Maul erreichen kann.

2. Stallanordnung gemäß Anspruch 1, **dadurch gekennzeichnet, dass** der nach hinten versetzte Teil (6) mit einer Seitenwand (2) des Stalls abschließt.

3. Stallanordnung gemäß Anspruch 1 oder 2, **dadurch gekennzeichnet, dass** ein Teil (8) der Stirnwand (4) des anliegenden Stalls (1), der dem nach hinten versetzten Teil (6) angrenzt, ebenfalls vom Gang (5) zurückgesetzt ist, aber keine Öffnung aufweist.

4. Stallanordnung gemäß einem der vorhergehenden Ansprüche, **dadurch gekennzeichnet, dass** das oder jedes nach hinten versetzte Teil (6,8) unter einem Winkel verläuft.

5. Stallanordnung gemäß einem der Ansprüche 1 bis 3, **dadurch gekennzeichnet, dass** das oder jedes der nach hinten versetzte Teile (6, 8) gebogen ist.

6. Stallanordnung gemäß einem der vorhergehenden Ansprüche, **dadurch gekennzeichnet, dass** eine mit einer Tür (10) verschließbare Einlassöffnung (9) in der Stirnwand (4) des Stalls ausgestaltet ist, wobei der Aufbau der Wand (4) zumindest auf der Unterseite der Einlassöffnung (9) unterbrochen ist.

7. Stall (1) zur Verwendung in einer Stallanordnung gemäß einem der vorhergehenden Ansprüche, wobei der Stall (1) von einer Anzahl von Wänden eingegrenzt ist und eine an einen Gang (5) angrenzende Stirnseite (4) hat, wobei die Stirnwand (4) von zumindest einigen Ställen (1) einen Teil (6) aufweist, der vom Gang (5) nach hinten versetzt ist, wobei zumindest eine Öffnung (7) in den nach hinten versetzten Teil (6) der Wand (4) ausgestaltet ist, **dadurch gekennzeichnet, dass** die Öffnung (7) eine Öffnung zum Füttern ist, durch die ein im Stall (1) gehaltenes Pferd seinen Kopf in den Gang (5) strecken kann, wobei sich die Öffnung (7) zum Füttern in einer geringen Höhe über dem Boden befindet, im Wesentlichen weniger als ein Meter über dem Boden, so dass wenn das Pferd seinen Kopf durch die Öffnung (7) zum Füttern streckt, es den Boden mit seinem Maul erreichen kann.

## Revendications

1. Structure d'étable, comprenant un certain nombre de stalles (1) mutuellement adjacentes, chacune reliée par un certain nombre de parois et ayant chacune une paroi avant (4) attenante à une voie de passage (5), la paroi avant (4) d'au moins certaines des stalles (1) ayant une partie (6) qui est en retrait par rapport à la voie de passage (5), au moins une ouverture (7) qui est formée dans la partie de retrait (6) de la paroi (4), **caractérisée en ce que** l'ouverture (7) est une ouverture d'alimentation à travers laquelle un cheval installé dans la stalle (1) peut placer sa tête dans la voie de passage (5), ladite ouverture d'alimentation (7) étant formée à une petite hauteur au-dessus du sol, en particulier inférieure à un mètre du sol, de sorte que lorsque le cheval place sa tête dans l'ouverture d'alimentation (7), il peut atteindre le sol (17) avec sa bouche.

2. Structure d'étable selon la revendication 1, **caractérisée en ce que** la partie de retrait (6) se termine dans une paroi latérale (2) de la stalle (1).

3. Structure d'étable selon la revendication 1 ou 2, **caractérisée en ce qu'**une partie (8) de la paroi avant (4) de la stalle (1) adjacente attenante à la partie de retrait (6) est également en retrait par rapport à la voie de passage (5), mais ne comporte pas d'ouverture.

4. Structure d'étable selon l'une quelconque des revendications précédentes, **caractérisée en ce que** la ou chaque partie en retrait (6, 8) s'étend selon un angle.

5. Structure d'étable selon l'une quelconque des revendications 1 à 3, **caractérisée en ce que** la ou chaque partie en retrait (6, 8) est incurvée.

6. Structure d'étable selon l'une quelconque des revendications précédentes, **caractérisée en ce qu'**une ouverture d'entrée (9) pouvant être fermée par une porte (10) est formée dans la paroi avant (4) de la stalle (1), la construction de la paroi (4) étant interrompue, au moins sur la face inférieure de l'ouverture d'entrée (9).

7. Stalle (1) destinée à être utilisée dans la structure d'étable selon l'une quelconque des revendications précédentes, ladite stalle (1) étant délimitée par un certain nombre de parois et ayant une paroi avant (4) attenante à une voie de passage (5), ladite paroi avant (4) ayant une partie (6) qui est en retrait par rapport à la voie de passage (5), au moins une ouverture (7) étant formée dans la partie en retrait (6) de la paroi (4), **caractérisée en ce que** l'ouverture (7) est une ouverture d'alimentation à travers laquelle un cheval installé dans la stalle (1) peut placer sa tête dans la voie de passage (5), ladite ouverture d'alimentation (7) étant formée à une petite hauteur au-dessus du sol, en particulier inférieure à un mètre du sol, de sorte que lorsque le cheval place sa tête à travers l'ouverture d'alimentation (7), il peut atteindre le sol (17) avec sa bouche.
